# EUROPEAN PATENT APPLICATION

(11) **EP 3 879 440 A1**
(43) Date of publication of application: **15.09.2021**
(21) Application number: 20217479.3
(22) Date of filing: 29.12.2020
(51) Int. Cl.: G06K 9/00, G06T 7/20

(54) **VIDEO ANALYSIS SYSTEM AND VIDEO ANALYSIS METHOD**

(30) Priority: 10.03.2020 JP 2020040748
(71) Applicant: Hitachi, Ltd., Tokyo 100-8280 (JP)
(72) Inventor: Tarui, Toshiaki, Tokyo, 100-8280 (JP); Murakami, Tomokazu, Tokyo, 100-8280 (JP); Fukuda, Shun, Tokyo, 100-8280 (JP); Tamura, Masato, Tokyo, 100-8280 (JP); Hiroki, Keiichi, Tokyo, 100-8280 (JP)
(74) Representative: Manitz Finsterwald Patent- und Rechtsanwaltspartnerschaft mbB

(57) **Abstract**

An object of the present invention is to provide a video analysis system and a video analysis method in which ownership between a person and baggage can be comprehensively determined. In a system that analyzes videos photographed by plural cameras, a detection/tracking process is performed for first and second objects using videos of plural cameras, and a relationship degree between the first and second objects is determined on the basis of the types of the first and second objects and a distance between the objects to be stored in a database.

## Description

### BACKGROUND

The present invention relates to a system for analyzing a video in which a moving object was photographed.

A video monitoring system that realizes security and safety by finding a suspicious person and a suspicious object in real time from a video of a monitoring camera has been widely used. In addition, a video monitoring system that monitors not only a single place, but also plural places and entire facilities comprehensively has appeared.

In such a situation, in order to search for and present a scene in which a specific person or object appears from an enormous amount of videos, various video search techniques have been proposed. Further, it has been required not only to search for a person or object separately, but also to monitor a relation between a person and an object in a video such as a person and baggage possessed by the person. Accordingly, it is possible to realize finding of a person who possesses specific baggage and determination of delivery and leaving of baggage.

Japanese Unexamined Patent Application Publication No. 2011-227647 is a relevant technique related to this technique. Japanese Unexamined Patent Application Publication No. 2011-227647 discloses a technique in which plural persons are detected and tracked in a camera video in a predetermined area, a relative position (distance) between a first person and a second person is calculated, and a case in which a distance between the persons is closer for a prescribed time or over is determined as a suspicious person.

### SUMMARY

In Japanese Unexamined Patent Application Publication No. 2011-227647, relationship between persons is determined using a single camera. Thus, in the case where relationship between a person and baggage photographed by a monitoring camera is determined, the following problems exist.

In the case where a relation between a person and baggage possessed by the person is grasped using a single camera, the baggage is hidden (occlusion) in some cases. Thus, there is a case that the baggage does not necessarily appear in all the frames in which the person appears. The reason is that the baggage cannot be detected because the baggage is hidden behind the person, or the baggage is hidden behind another person or baggage because the position of the baggage is low. Therefore, it is difficult to determine a relation between a person and baggage on the basis of inter-frame tracking such as determination of a relation between persons.

Further, in order to further strengthen ownership between a person and baggage, only a single camera is insufficient. For example, only a camera with an angle of view that photographs a person from the front cannot detect baggage carried on person's back such as a backpack. Thus, the possession of baggage carried on person's back cannot be determined by only the corresponding camera. In such a case, it is necessary to analyze a camera video with various angles of view placed at plural locations to comprehensively determine the ownership.

In addition, it is required to detect a suspicious person on the basis of a change in the ownership of baggage such as delivery or leaving of the baggage. However, in the determination using a single camera video, it is difficult to make a decision in the case where a video of an act itself is not photographed by a camera. In such a case, it is necessary to determine the possibility that the suspicious behavior occurs by using videos between plural cameras to clarify a change in the ownership of baggage.

Accordingly, an object of the present invention is to enable to comprehensively determine ownership between a person and baggage between plural cameras and to enable to grasp a change in the ownership between a person and baggage between plural cameras.

As an example of the present invention, in a system that analyzes videos photographed by plural cameras, a detection/tracking process is performed for first and second objects using videos of plural cameras, and a relationship degree between the first and second objects is determined on the basis of the types of the first and second objects and a distance between the objects to be stored in a database.

According to the present invention, it is possible to provide a video analysis system and a video analysis method in which ownership between a person and baggage can be comprehensively determined.

### BRIEF DESCRIPTION OF THE DRAWINGS

FIG. 1 is an entire configuration diagram of a video monitoring system in a first embodiment;
FIG. 2 is a configuration diagram of a person table held in a database in the first embodiment;
FIG. 3 is a configuration diagram of a baggage table held in the database in the first embodiment;
FIG. 4 is a configuration diagram of a person/baggage relationship table held in the database in the first embodiment;
FIG. 5 is an explanatory diagram for showing a change in how baggage is seen in plural frames in the first embodiment;
FIG. 6 is an in-camera baggage possession determination processing flowchart executed by a video analysis/database server in the first embodiment;
FIG. 7 is an explanatory diagram for showing an indicator value determination method of baggage possession determination in the first embodiment;
FIG. 8 is an explanatory diagram for showing an in-camera baggage track cluster and an inter-camera baggage possession determination method in the first embodiment;
FIG. 9 shows an example of a baggage possession search screen displayed on a terminal PC in the first embodiment;
FIG. 10 is an inter-camera baggage possession determination processing flowchart executed by the video analysis/database server in the first embodiment;
FIG. 11 is an explanatory diagram for showing a baggage tracking method in plural cameras in the first embodiment;
FIG. 12 is an inter-camera baggage possession status display processing flowchart executed by the video analysis/database server in the first embodiment;
FIG. 13 shows a display example in the case where a tracking target object is switched to baggage on a baggage possession search screen displayed on the terminal PC in the first embodiment;
FIG. 14 shows a display example in the case where leaving and delivery are detected on the baggage possession search screen displayed on the terminal PC in the first embodiment;
FIG. 15 shows an example of a person-baggage cooperation search screen displayed on the terminal PC in the first embodiment;
FIG. 16 is a person-baggage cooperation search processing flowchart executed by the video analysis/database server in the first embodiment;
FIG. 17 shows an example of a baggage possession search screen which is displayed on a terminal PC in a second embodiment and on which a wrong tracking object can be excluded;
FIG. 18 is a relationship determination processing flowchart between tracking objects executed by a video analysis/database server in the second embodiment;
FIG. 19 is a wrong tracking object exclusion processing flowchart executed by the video analysis/database server in the second embodiment; and
FIG. 20 is an explanatory diagram for showing a wrong tracking object exclusion method in the second embodiment.

### DETAILED DESCRIPTION

Hereinafter, embodiments of the present invention will be described with reference to the drawings.

### [First Embodiment]

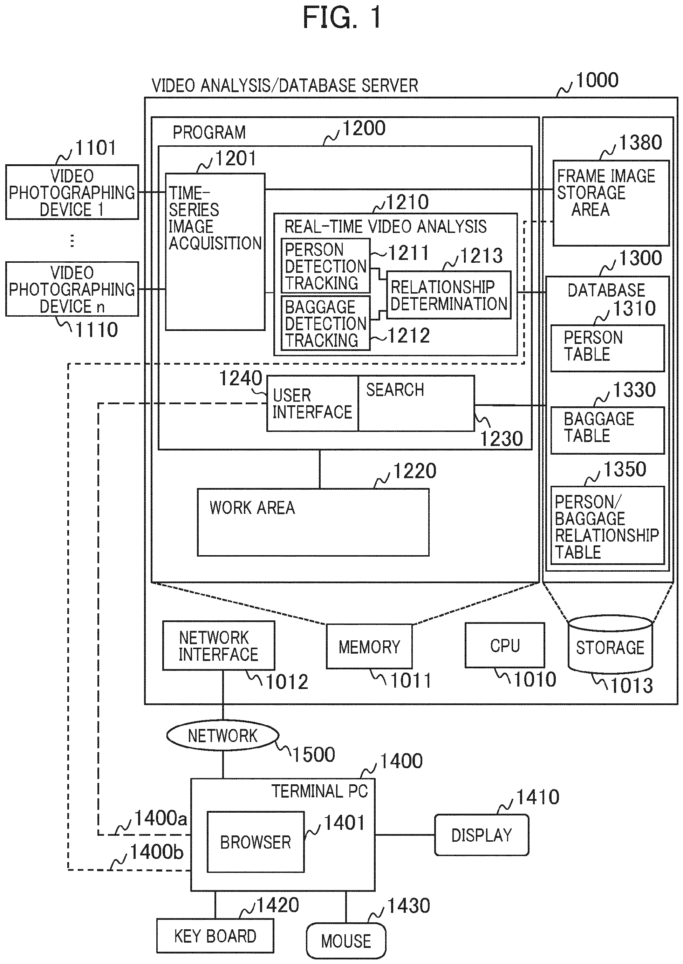

An entire configuration diagram of a video monitoring system in the embodiment is shown in FIG. 1. In FIG. 1, the reference numeral 1000 denotes a video analysis/database server, the reference numerals 1101 to 1110 denote video photographing devices of cameras and the like, and the reference numeral 1400 denotes a terminal PC for displaying and searching for a video analysis result. In the video monitoring system, the video analysis/database server 1000 and the terminal PC 1400 are connected to each other through a network 1500. It should be noted that as the video monitoring system, plural video analysis/database servers and a terminal PC may be connected to each other through a network.

The video analysis/database server 1000 is a normal PC server, and is configured using a CPU 1010, a memory 1011, a network interface 1012, and a storage 1013. Each function to be described below is expanded on the memory 1011, and is implemented as a program 1200 operated on the CPU 1010. A work area 1220 used by the program is further secured on the memory.

The storage 1013 has a database 1300 and a frame image storage area 1380 for a video of the camera.

In the video monitoring system, a video photographed by each of the video photographing devices 1101 to 1110 is analyzed by the video analysis/database server 1000, the result is stored in the database 1300, and an analysis/search result is output to the terminal PC 1400 to be provided to a monitoring person (operator).

The database 1300 includes a person table 1310 in which information of a detected person is input, a baggage table 1330 in which information of detected baggage is input, and a person/baggage relationship table 1350 in which information indicating a relationship (ownership and the like) between the person and the baggage is input.

As a function of the video analysis/database server 1000, a time-series image acquisition functional unit 1201 acquires images of the latest video frames of time-series images from each of the video photographing devices 1101 to 1110, and the images are stored in the frame image storage area 1380 of the storage 1013. Further, the real-time video analysis functional unit 1210 conducts a real-time video analysis for each video frame. Namely, the real-time video analysis functional unit 1210 allows a relationship determination functional unit 1213 to determine the relationship between a person and baggage detected after processes by a person detection tracking functional unit 1211 and a baggage detection/tracking functional unit 1212 are performed. Here, the person and the baggage may be detected by one multi-class detector. Each of the detection/tracking result of the person and the baggage and the determined relationship is stored into the person table 1310, the baggage table 1330, and the person/baggage relationship table 1350 in the database 1300.

A user interface functional unit 1240 in the program 1200 of the video analysis/database server 1000 displays a baggage possession search screen and the like on a display 1410 using a browser 1401 of the terminal PC 1400. The operator operates the screen using a mouse 1430 and a keyboard 1420 to perform a baggage possession search and the like. The operation by the operator (for example, a baggage possession search operation) is transmitted to a search functional unit 1230 through the browser 1401 and the user interface functional unit 1240 of the video analysis/database server 1000, data on the database 1300 is searched, and the search result is displayed on the display 1410. The video of the search result to be displayed is read from the frame image storage area 1380.

The embodiment is characterized in that the relationship determination functional unit 1213 of the video analysis/database server 1000 determines a relationship between the person and the baggage detected and tracked in real time to be stored in the person/baggage relationship table 1350 in the database 1300, and the operator searches the database 1300 in accordance with an operation such as a baggage possession search input from the terminal PC 1400 to determine baggage possession on the basis of the time-series person/baggage relationship obtained from plural video photographing devices.

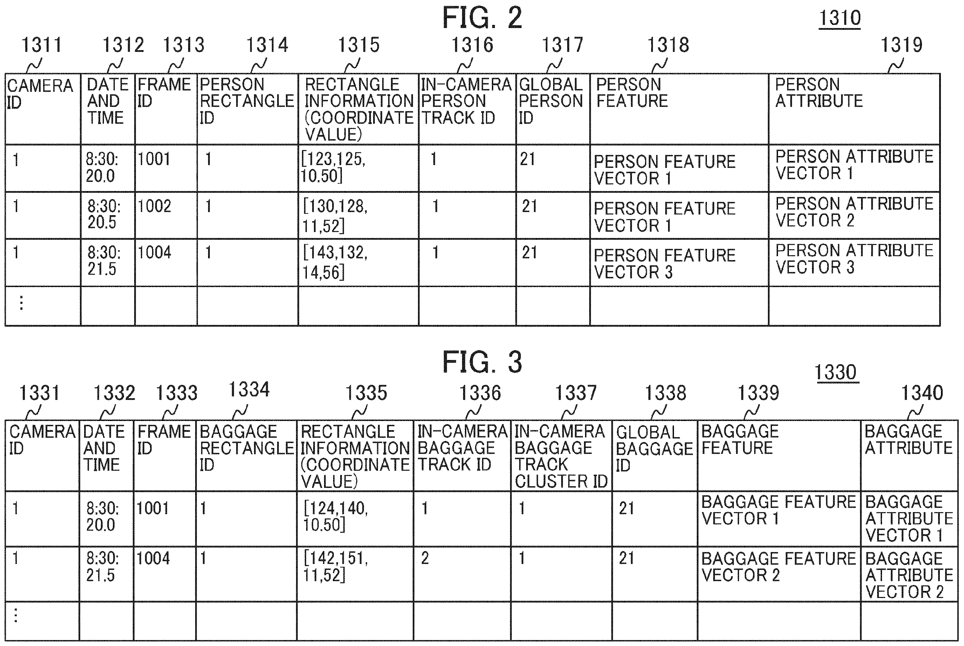

A detailed configuration of the person table 1310 in the database 1300 is shown in FIG. 2. Each row of the database is associated with a person rectangle detected in each video frame. Namely, each row is created every time the person detection tracking functional unit 1211 detects one person in a video frame. In the case where a person appears in plural time-series frames, the rows corresponding to the number of frames in which the person appears are created.

In FIG. 2, the following information is stored in the person table 1310.
(1) Camera ID 1311: the ID of a camera that detected the person
(2) Date and time 1312: the date and time when the person was detected (although hours, minutes, and seconds are shown in the drawing for the sake of simplicity, UNIX time and the like are recorded in reality)
(3) Frame ID 1313: the ID of a video frame in which the person was detected
(4) Person rectangle ID 1314: the ID of a person rectangle (a rectangle surrounding the detected person) in a video frame. The ID is a unique value in a frame.
(5) Rectangle information 1315: a coordinate value (two-dimensional coordinates in an image) of a person rectangle in a video frame. For example, the information is represented by coordinates of the central point of the rectangle and an array holding the longitudinal/lateral lengths of the rectangle.
(6) In-camera person track ID 1316: the ID of the person given as a result of person tracking in a camera. The ID is a unique value for each camera.
(7) Global person ID 1317: the ID of the person given as a result of person tracking between cameras. The ID is a unique value in the entire system.
(8) Person feature 1318: a vector value storing the feature of the appearance of the person. Persons who are similar in appearance have close features. The feature is used for in-camera person tracking, an inter-camera person search, and the like.
(9) Person attribute 1319: a vector value representing the attributes (the gender, age, cloth color, and the like) of the person. The attribute is used for an attribute search.

A detailed configuration of the baggage table 1330 in the database 1300 is shown in FIG. 3. Each row of the database is associated with a baggage rectangle detected in each video frame. Even in the case where baggage appears in plural time-series frames, the rows corresponding to the number of frames in which the person appears are created.

In FIG. 3, the following information is stored in the baggage table 1330.
(1) Camera ID 1331: the ID of a camera that detected the baggage
(2) Date and time 1332: the date and time when the baggage was detected
(3) Frame ID 1333: the ID of a video frame in which the baggage was detected
(4) Baggage rectangle ID 1334: the ID of a baggage rectangle in a video frame
(5) Rectangle information 1315: a coordinate value of a baggage rectangle in a video frame
(6) In-camera baggage track ID 1336: the ID of the baggage given as a result of baggage tracking in a camera. The ID is a unique value for each camera. In the case where the baggage tracking interrupted due to an occlusion, plural IDs are assigned to the same baggage in some cases. These plural tracks are grouped by the following track cluster ID 1337.
(7) In-camera baggage track cluster ID 1337: the ID given by grouping baggage tracking results (plural in-camera baggage track IDs) that were interrupted due to an occlusion on the same baggage basis. The same value is assigned to baggage clusters determined as the same. The ID is a unique value for each camera.
(8) Global baggage ID 1338: the ID of the baggage given as a result of baggage tracking between cameras
(9) Baggage feature 1339: a vector value storing the feature of the appearance of the baggage
(10) Baggage attribute 1340: a vector value representing the attributes (the type, color, and the like) of the baggage

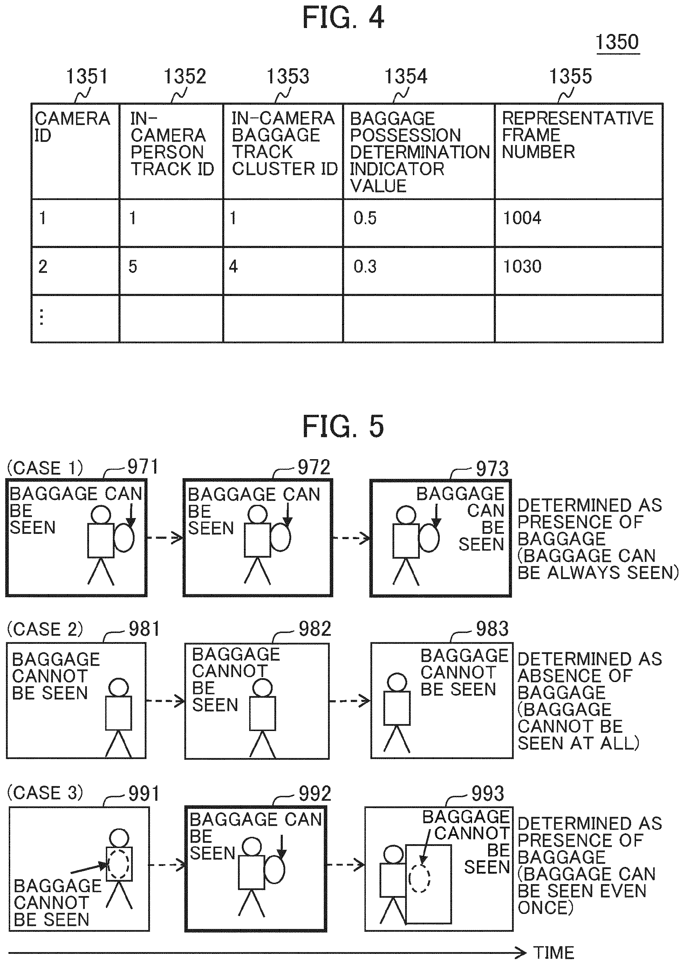

A configuration of the person/baggage relationship table 1350 in the database 1300 is shown in FIG. 4. Each row of the database is created for each combination of a person and baggage determined to be high in relationship. Specifically, relationship is stored for a combination of a person track and a baggage track cluster determined to be close in distance in an image (to be described later). In the case where one person has plural pieces of baggage, plural rows are created for one person.

In FIG. 4, the following information is stored in the person/baggage relationship table 1350.
(1) Camera ID 1351: the camera ID that determined the relationship between the person and the baggage
(2) In-camera person track ID 1352: the track ID of the person determined to have relationship
(3) In-camera baggage track cluster ID 1353: the track cluster ID (a set of baggage tracks) of the baggage determined to have relationship
(4) Baggage possession determination indicator value 1354: an indicator value indicating the possibility that the baggage belongs to the person (hereinafter, described as "indicator value")
(5) Representative frame number 1355: the frame number of a video having the highest possibility that the baggage belongs to the person. The number is used when a search result is displayed on a GUI.

Here, a basic policy of a baggage possession determination of the embodiment will be described using FIG. 5. In FIG. 5, cases 1 to 3 show how baggage is seen. In the drawing, three frames of a time-series video of the same camera are shown. In the case 1, baggage can be seen in all the frames, and it is determined that there is baggage. In the case 2, no baggage can be seen in any frames, and thus it is determined that there is no baggage (however, there is an exception as will be described later). In the case 3, baggage can be seen in only a part of frames. In this case, it is necessary to determine that the corresponding person has baggage. As described above, baggage can be seen or cannot be seen due to an occlusion or an angle of view. Thus, in the case where baggage appears even in one frame of the person tracking result, it is necessary to determine that the person has baggage. However, although the person has baggage, there is a case that no baggage is photographed in any frames depending on an angle of view. A backpack determined by a front angle-of-view camera is the example. In order to correctly determine the baggage possession even is such a case, it is necessary to comprehensively determine the baggage possession on the basis of videos of plural cameras.

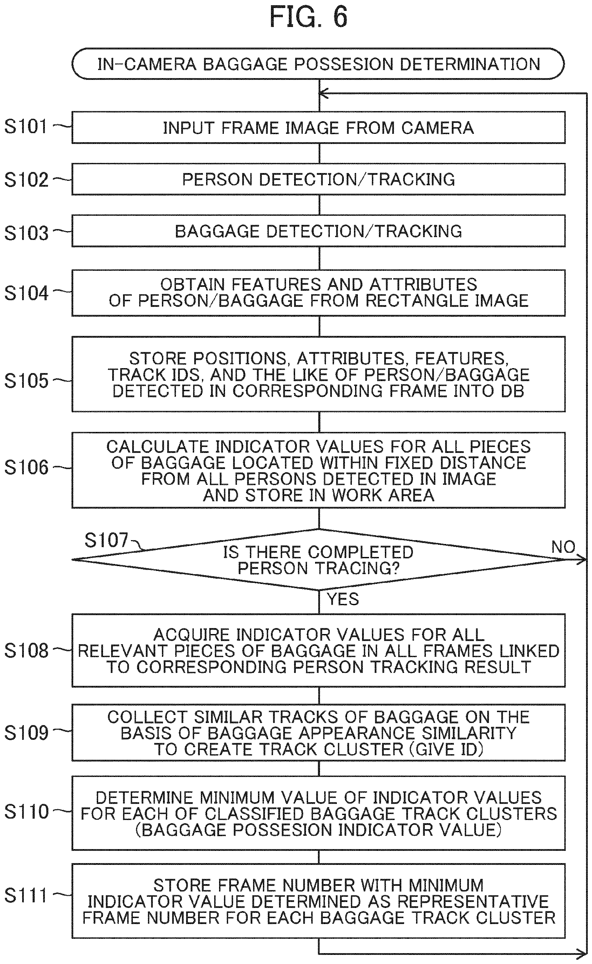

A processing flow of an in-camera baggage possession determination performed by the real-time video analysis functional unit 1210 is shown in FIG. 6. First, after a frame image is input from a camera (Step S101), person detection/tracking (Step S102) and baggage detection/tracking (Step S103) are performed.

In the detection process, rectangles of the person and the baggage are extracted from a still image. In the case where a common object detector is used, the process is divided in accordance with the type (person/baggage) of the detected object. The tracking process is a known technique, and from objects (person/baggage) detected in continuous frame images, the same objects are linked on the basis of the similarity of the appearance and the position in the video. For example, in the case of persons, each person detected in frame images processed this time is linked to one detected in previous frames in consideration of the similarity of the appearance and the position. The in-camera person track ID 1316 is newly given to a person rectangle that has newly appeared. The tracked result is managed as a track (trace). The track ID is assigned to each object determined as the same in the continuous images in the camera by the above-described process.

After the person features, baggage features, person attributes, and baggage attributes of all the persons and all the pieces of baggage detected in the corresponding frames are obtained (Step S104), the rectangle positions, attributes, and features of the detected persons and pieces of baggage are written into the corresponding areas of the person table 1310 and the baggage table 1330 of the DB. The track IDs given by tracking are stored in an in-camera person track ID 1316-area of the person table and an in-camera track ID 1336-area of the baggage table (Step S105).

Next, the possibility that the persons have the pieces of baggage is determined. Indicator values (to be described later) are calculated for all the pieces of baggage located within a fixed distance (for example, three times the width of the person rectangle) from all the persons detected in the images, and are temporarily (until the tracking is finished) stored in the work area 1220 together with the frame IDs (Step S106).

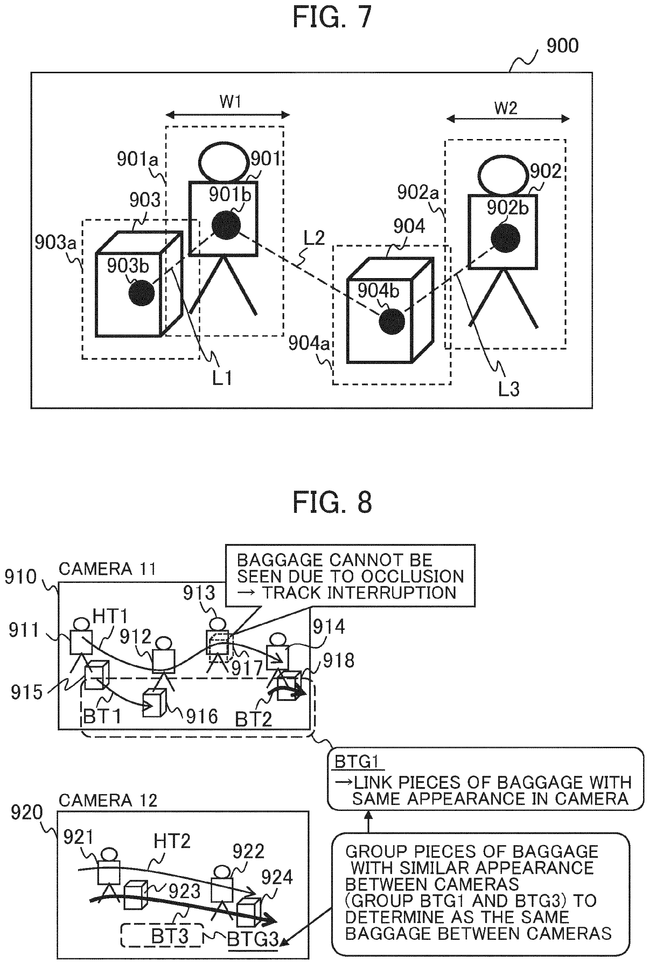

Here, a calculation method of the indicator value will be described using FIG. 7. FIG. 7 shows a case in which there are persons 901 and 902 and pieces of baggage 903 and 904 in an image 900.

In the embodiment, as the indicator values , values obtained by dividing distances (the numbers of pixels) (L1, L2, and L3 in the drawing) on the image between the central points of the person and baggage rectangles shown in FIG. 7 by the widths (the numbers of pixels) (W1 and W2 in the drawing) of the person rectangles are used. The concrete examples are as follows.

The possibility that the person 901 has the baggage 903: L1/W1

The possibility that the person 901 has the baggage 904: L2/W1

The possibility that the person 902 has the baggage 904: L3/W2

Here, as the indicator values, values from 0 to 3 are used. As the indicator value is smaller, the distance is nearer, and it is determined that there is a high possibility that the corresponding person is the owner of the corresponding baggage.

With reference to FIG. 6 again, next, it is determined whether or not the person tracing has been completed (Step S107) . Specifically, in the case where any new person rectangle is not added in the corresponding track for a fixed time (for example, 4 seconds) or more, it is determined that the person disappears from the corresponding screen of the camera and that the track is completed. If there is no completed person tracing, the flow returns to Step S101 to continue the process of the next frame image.

If there is completed person tracing, all the indicator values for the pieces of baggage linked to the corresponding person in all the frames linked to the corresponding person tracking result (track ID), namely, a local relationship degree between the objects in plural frame images is acquired from the work area 1220 (Step S108). Next, similar tracks of baggage are grouped on the basis of the similarity of the appearance of baggage using the baggage feature 1339 of each baggage to create a track cluster (Step S109). A new track cluster ID is allocated to each track cluster, and is written into the in-camera baggage track cluster ID field 1337 of the baggage table. By grouping the baggage tracks that are linked to the selected person and are similar in appearance into a track cluster, it is possible to integrate the baggage tracking that was interrupted due to an occlusion and the like.

Here, the baggage track cluster will be described using FIG. 8. The track cluster is determined for each camera. FIG. 8 explains a state in which a person and baggage are tracked by cameras between plural frames (for the explanation, a person and baggage at plural times are written in the same picture) . In the case of the camera 11, the following person/baggage tracking results are detected and determined.
Person track HT1: person rectangles 911, 912, 913, and 914
Baggage track BT1: baggage rectangles 915 and 916
Baggage track BT2: baggage rectangle 918

Here, the baggage is hidden by the person and cannot be seen at the time corresponding to the person rectangle 913, and thus the baggage track is interrupted once (divided into two baggage tracks BT1 and BT2). Accordingly, as a result of a determination that BT1 and BT2 are of the same baggage, BT1 and BT2 are grouped to create a baggage track cluster BTG1 in the process of Step S109. On the other hand, the baggage track is not interrupted in the case of the camera 12, and thus a baggage track cluster BTG3 is configured using only the baggage track BT3.

With reference to the flow of FIG. 6 again, the minimum value of the indicator values for the corresponding (traced) person, namely, an in-camera-video inter-object relationship degree is further determined for each baggage track cluster (Step S110), and is used as an indicator value indicating the possibility that the corresponding person has the baggage associated with the corresponding track cluster. Finally, the minimum value of the indicator values is stored in the person/baggage relationship table 1350 as the baggage possession determination indicator value 1354 for a combination of the corresponding person and baggage track cluster, and the frame number with the indicator value determined is stored as the representative frame number 1355 (Step S111). Thereafter, the flow returns to Step S101 to continue the process for the next frame.

By the above-described process, a combination of a person and baggage that possibly belongs to the person and the indicator value are obtained in an in-camera video, and can be stored in the database.

Next, a baggage possession searching method between plural cameras will be described. First, an outline of a searching process will be described. When an operator designates an attentional person (the owner of baggage) in an in-camera baggage search, the corresponding person is first tracked between the cameras from the information of the database 1300. Namely, a person who is similar in appearance to the corresponding person is searched for in all the cameras, and the results are arranged in the order or time. On the basis of the person tracking information between plural cameras, the database is further searched, and all the pieces of baggage that possibly belong to the corresponding person are obtained in each camera to be displayed in a time-series manner. Further, on the basis of the baggage possession information in plural cameras, the pieces of baggage that possibly belong to the corresponding person are comprehensively determined and displayed.

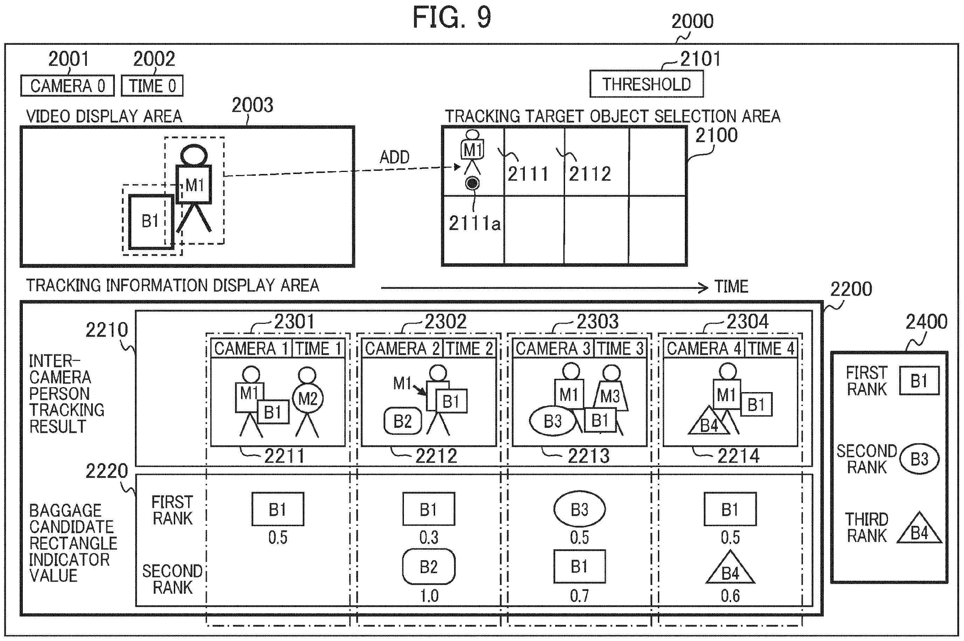

FIG. 9 is an example of the baggage possession search screen displayed on the terminal PC in the embodiment. In FIG. 9, the reference numerals 2001 and 2002 denote a camera ID and time on a display screen 2000, respectively, and a video of an attentional camera and time is displayed in a video display area 2003. An operator designates the camera ID and time to display the attentional video. Alternatively, the operator can select a video from a search result to be described later. In FIG. 9, a person M1 and baggage B1 are displayed in the video.

On the basis of the video displayed by designating the camera ID and time or the video obtained from a search result to be described later, the operator selects a person or baggage from the video display area 2003 to be added to a tracking target object selection area 2100 by dragging. The tracking target object selection area can display plural objects (2111, 2112, and the like) to switch a tracking target object to be described later. The object displayed in the corresponding field is selected using a selection button 2111a as a tracking target between the cameras. In FIG. 9, the person M1 is selected, and is to be tracked between the cameras. The reference numeral 2101 denotes a threshold used to determine the same person at the time of the person tracking. In the threshold, a default value is displayed in advance, and manual input is required only when a value other than the default value is used.

A baggage possession search result is displayed in the lower half of the display screen 2000. The reference numeral 2200 denotes a tracking information display area. In an inter-camera person tracking result area 2210, videos (2211, 2212, 2213, and 2214) of the respective cameras for the corresponding person (M1 in the drawing) detected from the inter-camera person tracking result are arranged in the order of time. The video is a representative frame image of each track detected between the cameras to be described later. The camera ID and the time of the representative video are also displayed. In an area 2220, rectangle images of baggage candidates determined by the respective cameras and the indicator values are displayed on a track (camera) basis described above. This screen displays information obtained by tracking the person between the cameras in a time-series manner. Namely, information determined by the camera 1 is displayed in an area 2301, and information determined by the camera 2 is displayed in an area 2302 (the same applies to an area 2303 and the like). In the case where there are plural pieces of baggage of each camera as candidates, the pieces of baggage are displayed from the top in ascending order of the indicator value. Namely, baggage B1 and baggage B2 are displayed in the camera 2 displayed in the area 2302. The baggage B1 whose indicator value (0.3) is smaller is displayed in first rank, and the baggage B2 whose indicator value (1.0) is larger is displayed in second rank. Although the pieces of baggage up to the second rank are displayed in the example, more pieces of baggage can be displayed or the pieces of baggage can be scrolled.

A possession determination overall ranking is displayed in an area 2400 of the display screen 2000. Namely, the results obtained by determining the possibility of the possession of the person M1 by plural cameras are comprehensively determined (to be described later), and the pieces of baggage that possibly belong to the corresponding person are displayed. In FIG. 9, the baggage having the highest possibility of the possession is B1, followed by B3 and B4. The operator determines which baggage belongs to the person M1 on the basis of the information displayed herein.

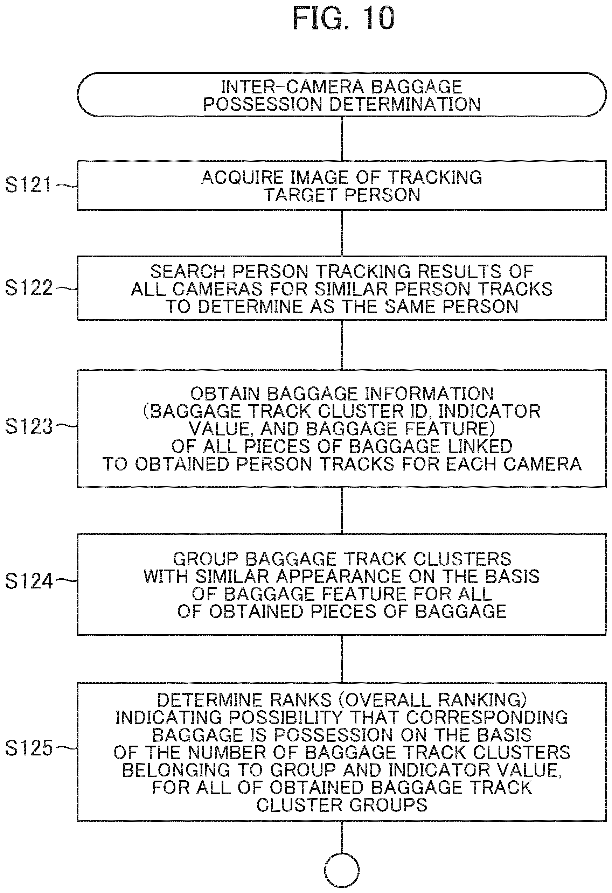

Next, a determination processing flow of an inter-camera baggage possession in the embodiment will be described using FIG. 10.

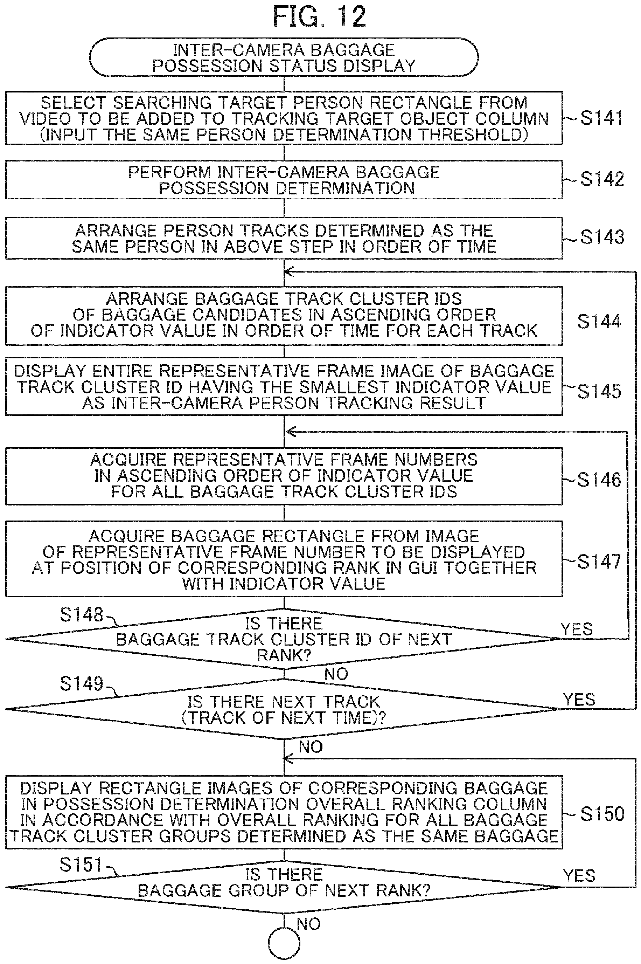

FIG. 10 serves as an algorithm of a determination part in a display flow described using Fig. 12 to be described later. In FIG. 10, when a rectangle image of a tracking target person is obtained (Step S121), the person tracking results of all the cameras are searched for the track of a person who is similar in appearance (Step S122). Specifically, the person feature 1318 of the person table is compared to acquire the track including a person having a difference equal to or smaller than the threshold. As a result, the person track determined as the same person is obtained (for each camera).

Thereafter, the baggage information (the baggage track cluster ID, indicator value, and baggage feature) of all the pieces of baggage (all the pieces of baggage that are registered in the person/baggage relationship table 1350 and possibly belong to the corresponding person) linked to the person track obtained as described above is obtained for each camera (Step S123). Specifically, the person/baggage relationship table 1350 is referred to using the camera ID 1351 and in-camera person track ID 1352, and the baggage information (the baggage track cluster ID 1353 and the baggage possession determination indicator value 1354) is obtained. Thereafter, the baggage track clusters of all the pieces of baggage obtained as described above that are similar in appearance are grouped on the basis of the baggage feature 1339 of the baggage table, and are determined as the same baggage (Step S124).

Here, a "baggage track cluster group" will be described using FIG. 8. The baggage track cluster BTG1 (including the baggage tracks BT1 and BT2) is determined in the camera 11, and the baggage track cluster BTG3 (including the baggage track BT3) is determined in the camera 12. In the case where the pieces of baggage photographed by these different cameras are similar and are determined as the same baggage, the baggage track clusters of the different cameras are grouped to be determined as the same baggage between the cameras.

With reference to FIG. 10 again, all the baggage track cluster groups obtained as described above are determined to set ranks (overall ranking) indicating the possibility that the corresponding baggage belongs to the person on the basis of the number of baggage track clusters belonging to each group and the indicator value of each baggage track cluster (Step S125). Namely, the baggage track cluster groups are arranged in order from the baggage having the highest possibility of the possession on the basis of the number of time the baggage appears with the person and the closeness between the baggage and the person. The following is an example of the determination method.
(1) The groups are arranged in descending order of the number of baggage track clusters belonging to each group. Namely, the groups are arranged in descending order of the camera in which the number of times the baggage appears near the person is larger.
(2) In the case where the numbers of times are equal to each other, the groups are arranged in ascending order of the total value of indicator values. Namely, the baggage existing nearer the person is displayed high in rank.

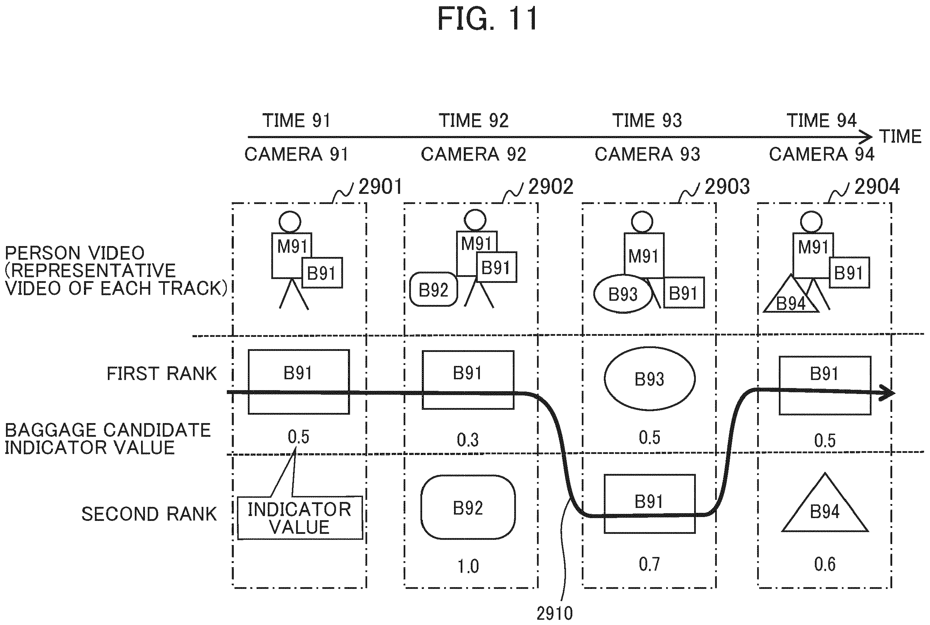

The above-described method of determining the ranks (overall ranking) indicating the possibility that the baggage belongs to the designated person by the inter-camera tracking will be described in detail using FIG. 11. FIG. 11 shows contents similar to the information displayed in the tracking information display area 2200 of FIG. 6. Namely, images (person videos) obtained by tracking a person M91 in time-series, videos (the first rank and the second rank) of pieces of baggage of candidates of possessions, and indicator values are displayed in time-series (2901 to 2904). Here, four baggage candidates B91, B92, B93, and B94 are detected. Among those, the appearance frequency of the baggage B91 is four times that is the highest, and the number of cameras in which the baggage B91 appears near the person M91 is the largest. Thus, it is determined that the possibility that the baggage B91 is the baggage is the highest in this case. Each of other pieces of baggage 92 to 94 appears only once, and thus it is determined that the pieces of baggage B93, B94, and B92 are possibly baggage in ascending order of the indicator value.

FIG. 10 describes the processing flow of determining the baggage that possibly belongs to the designated person. On the contrary, it is possible to realize the determination of the person who is possibly the owner of the designated baggage by a method same as the above-described processing flow by switching the person and the baggage. Specifically, the part using the person track (trace) for the person serves as a baggage track cluster (a set of traces), and the part as a group of the baggage track cluster serves as a person track group.

FIG. 12 shows a processing flow in which an inter-camera baggage possession determination result is displayed using the screen of FIG. 9 in the embodiment. In FIG. 12, a person rectangle as a searching target is first selected from videos to be added to the tracking target object column by dragging (input the same person determination threshold if needed) (Step S141). Thereafter, the inter-camera baggage possession search determination processing flow shown in FIG. 10 is performed (Step S142) .

The traces (tracks) of the person determined as the same person obtained in Step S142 are arranged in the order of time (Step S143). Thereafter, Step S144 and processes subsequent thereto are performed for each of the traces (tracks) in order starting from the earliest time. Namely, the baggage track cluster IDs of the baggage candidates are arranged in ascending order of the indicator value (Step S144). Thereafter, the representative frame number 1355 is acquired from the person/baggage relationship table for the baggage track cluster ID having the smallest indicator value, and the entire camera image of the representative frame is displayed in the column 2210 of FIG. 9 as an inter-camera person tracking result (also display the camera ID and time).

Further, Step S146 and processes subsequent thereto are performed for all the baggage track cluster IDs in ascending order of the indicator value. Namely, the representative frame number is acquired (Step S146), and an image of a baggage rectangle is acquired from the image of the representative frame number to be displayed, together with the indicator value, at the position of the corresponding rank in the column 2220 of FIG. 9 (Step S147). In the case where the baggage track cluster ID of the next rank exists, the process repeatedly returns to Step S146 (Step S148). Further, the trace (track) of the next time exists, the process repeatedly returns to Step S144 (Step S149).

Finally, for all the baggage track cluster groups determined as the same baggage, the rectangle images (any of the rectangles of the representative frame numbers) of the baggage are displayed in the possession determination overall ranking area 2400 in accordance with the overall ranking (Step S150). In the case where the baggage track cluster group of the next rank exists, Step S150 is repeated (Step S151).

The display processing flow described in FIG. 12 is a processing flow in which the baggage that possibly belongs the person is displayed using the person image as a key. However, the determination of the person who is possibly the owner can be also realized by the same method using the baggage image as a key.

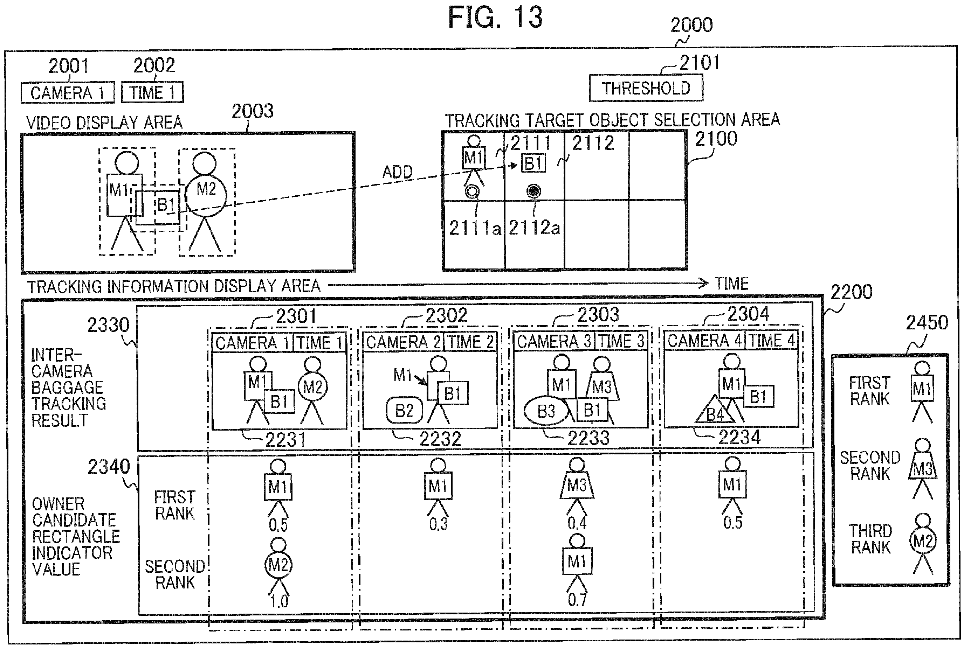

A screen example used in the case where the owner is determined using the baggage image as a key by switching the tracking target object is shown in FIG. 13. The rectangle of the baggage B1 is dragged from the frame images displayed in the video display area 2003 to be added to an empty area 2112 of the tracking target object selection area 2100, and then the baggage B1 is selected using a selection button 2112a. As a result, an inter-camera tracking result of the baggage is displayed in the tracking information display area 2200 (each frame image of 2330), and the person rectangles of the owner candidates for the tracks of the respective cameras are displayed together with the indicator values in the column 2340. Further, the owner candidates of the baggage B1 determined by plural cameras are displayed in an owner determination overall ranking display area 2450 in descending order of the possibility.

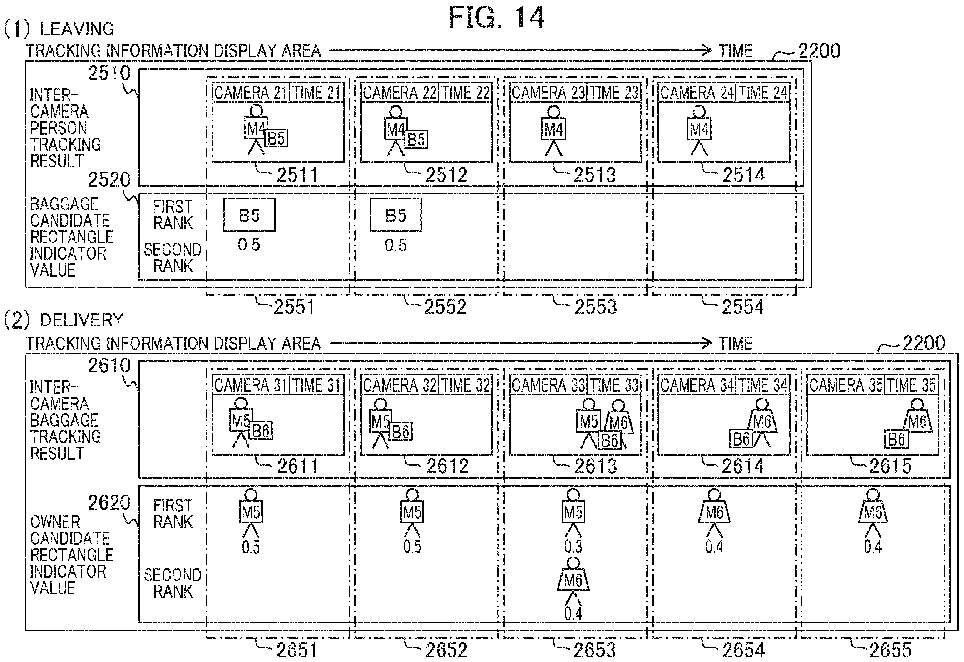

Here, as a utilization example of the embodiment, an example in which leaving or delivery is detected by utilizing the information of the tracking information display area 2200 is shown in FIG. 14.

In FIG. 14, (1) shows an example in which leaving was detected. In the tracking information display area 2200, a person M4 is tracked in time-series to determine a possession. In videos (2511 and 2512) of a camera 21 and a camera 22, the person M4 possesses baggage B5. However, in videos (2513 and 2514) of a camera 23 and a camera 24, the possessed baggage of the same person M4 disappears. In this case, it can be determined that leaving of the baggage has possibly occurred between the camera 22 and the camera 23. As described above, the determination can be made even if a site itself where the baggage was left was not photographed.

Strictly speaking, it is necessary to confirm that other persons do not have the corresponding baggage B5 by performing the baggage tracking. In the case where the other persons have the baggage B5, it is determined as delivery to be described next.

In FIG. 14, (2) shows an example in which the delivery was conducted. In the tracking information display area 2200, results of the owner determination obtained by tracking baggage B6 are shown in time-series. In videos (2611 and 2612) of cameras 31 and 32, a person M5 is the owner of the baggage. On the contrary, in videos (2614 and 2615) of cameras 34 and 35, a person M6 is the owner thereof (in a camera 33, both of the persons M5 and M6 are owner candidates). Thus, since the owner is changed at the point of the camera 33, it is possible to detect the delivery. Even in this case, if a video 2613 of the camera 33 in which the delivery was conducted was not photographed and it can be found that the owner M5 was switched to the owner M6 in preceding and succeeding videos, it can be determined as delivery.

As described above, various persons and pieces of baggage in videos are selected from the tracking target object selection area 2100 to determine the possession and owner by tracking, and the results are displayed in the tracking information display area 2200. Accordingly, it is possible to determine the ownership of baggage from various viewpoints such as the possession, owner, leaving, and delivery.

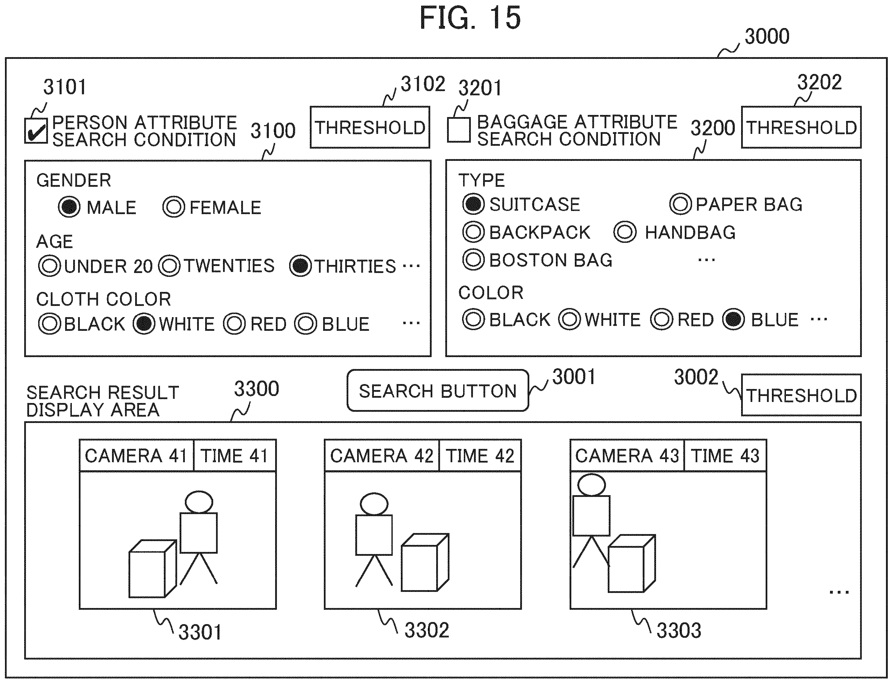

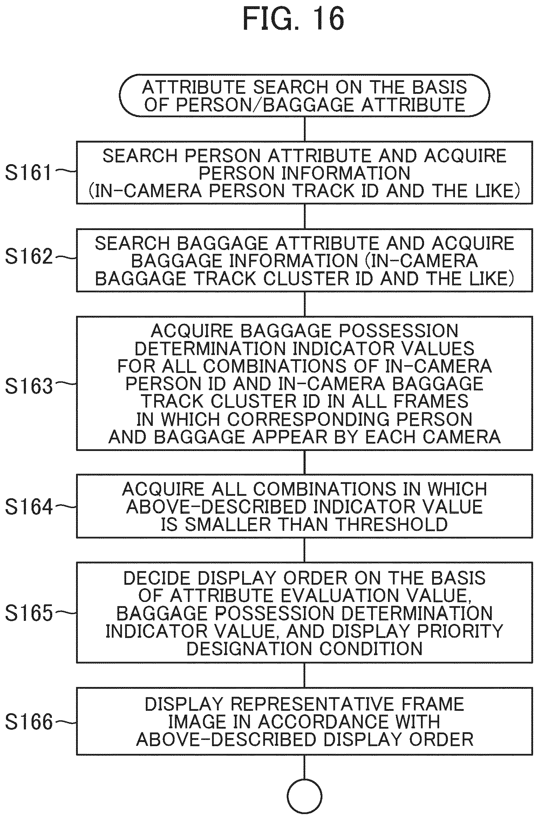

Next, a method of performing a person-baggage cooperation search in the video analysis system of the embodiment will be described using FIG. 15 and FIG. 16. In a conventional image search, a search (for example, an attribute search of a person, a similar image search of a person, or a similar image search of baggage) focusing on a single object was realized. However, a search in consideration of a relation between plural objects (for example, a search of a person having particular baggage) is realized in the embodiment.

A screen interface of the person-baggage cooperation search is shown in FIG. 15. This screen is also displayed on the display 1410 of the terminal PC 1400. A display screen 3000 is a screen that realizes a search cooperating a person attribute with a baggage attribute. The attributes (the gender, age, cloth color, and the like) of a person as a search target is designated in an area 3100, and the baggage attributes (the type, color, and the like) as a search target is designated in an area 3200. When a search button 3001 is pressed, a scene in which the corresponding person has the corresponding baggage is searched for, and is displayed in a search result display area 3300. The scenes of search results are displayed in descending order of the possibility that the search results match conditions in an area 3300 (3301 to 3303). In each search result, a camera ID, time, and an image of a representative frame in which a person possesses baggage are displayed.

The reference numerals 3101 and 3201 denote check boxes for designating a person attribute search result or a baggage attribute search result to be sorted on a priority basis when the search results are displayed. Since the priority of the person attribute search is designated in the example of FIG. 15, the search results in which the matching degree of the person attribute is high are displayed on a priority basis (the detail thereof will be described later). Each of the reference numerals 3102 and 3202 denotes a threshold used to determine that the attributes are the same in the person/baggage attribute search, and the reference numeral 3002 denotes an area in which the threshold of an indicator value to determine a baggage possession is input (a default value has been input as an initial value in each area, and can be changed).

FIG. 16 shows a processing flow of a person-baggage cooperation attribute search in the embodiment. In FIG. 16, the person table 1310 is first searched with the person attributes designated in the area 3100 of FIG. 15, and person information (a combination of the camera ID 1311 and the in-camera person track ID 1316) matching the designated attribute information is obtained (Step S161). Specifically, a distance between an attribute vector created on the basis of the attribute value designated in the area 3100 and the person attribute (1319) stored in the person table is closer than the threshold designated in the area 3102. Likewise, the baggage table 1330 is searched with the baggage attributes designated in the area 3200, and the corresponding baggage information (the camera ID 1331 and the in-camera baggage track cluster ID 1337) is obtained (Step S162).

Next, for all the frames (all the frames obtained by matching the frame ID 1313 of the person table and the frame ID 1333 of the baggage table with each other) in which the corresponding person and baggage appear, the person/baggage relationship table 1350 is searched for all the combinations of the person and the baggage (all the combinations of the in-camera person ID and the in-camera baggage track cluster ID) for each camera, and the baggage possession determination indicator value 1354 is obtained (Step S163). Thereafter, all the combinations in which the above-described indicator value is smaller than the threshold designated in the area 3002 are acquired (Step S164).

Thereafter, on the basis of the display priority designated in the areas 3101 and 3201, the determination using the evaluation value (the distance between the designated attribute vector and the attribute vector of the database) of the person/baggage attributes and the baggage possession determination indicator value is made to determine the priority degree of the search result display (Step S165). For example, the following determination is made.
(1) A case in which the person attributes are given priority: a descending order of the matching degree of the person attributes. Namely, an ascending order of a distance between the designated attributes and the person attribute vector stored in the DB. It should be noted that in the case where the person attribute determination results are the same, a descending order of the matching degree of the baggage attributes is used.
(2) A case in which the baggage attributes are given priority: a descending order of the matching degree of the baggage attributes. It should be noted that in the case where the baggage attribute determination results are the same, a descending order of the matching degree of the person attributes is used.
(3) A case in which both of the person attributes and the baggage attributes are given priority (both of the areas 3101 and 3201 are checked): an ascending order of the weighting average of the person attributes, the baggage attributes, and the evaluation values. Namely, a descending order of the possibility of the possession because the attributes are comprehensively close.
(4) A case in which neither the person attributes nor the baggage attributes are given priority (neither the areas 3101 nor 3201 are checked): an order of time

With reference to FIG. 16 again, an image of the representative frame number 1355 of the person/baggage relationship table is finally displayed in accordance with the above-described display order (Step S166).

It should be noted that although an example of the attribute search has been described above, the similar image search of the person and the baggage in cooperation can be also made and displayed using the same screen and algorism. In this case, the person and the baggage that are similar in appearance to the searched person/baggage rectangle images are searched for on the basis of the similarity (the distance of the feature vector) instead of the matching degree of the attribute vector. Further, the determination in which the attributes and the similar images are combined to each other can be also made by the same method. For example, a person who is similar to a particular person and has a blue suitcase can be searched for.

As described above, according to the embodiment, since a first object and a second object are stored in the database while being linked to each other, combinations of plural objects can be monitored, namely, for example, the ownership of the baggage by the person can be determined. In addition, even in the case where the baggage does not appear in all the frames, the similar baggage can be linked and associated using the owner as a key. Further, similar objects (a person and baggage) are determined between cameras, and the determination of the ownership in which information of plural cameras is integrated can be made. Further, a change in the ownership between plural cameras can be determined.

### [Second Embodiment]

In the first embodiment, the possession/owner determination of the corresponding person/baggage is made on the basis of the time-series results obtained by tracking the person and the baggage similar in appearance features to those selected in the tracking target object selection area 2100 between plural cameras. However, if other persons and other baggage that are similar in appearance are mixed in the similarity (person/baggage) search conducted in the tracking, wrong tracking occurs, and the determination result is possibly incorrect. In particular, there are many pieces of similar baggage, and thus it is conceivable that wrong tracking is likely to occur.

Accordingly, in the embodiment, provided is a function of deleting tracking results (tracks by cameras) of the person/baggage displayed as a result of wrong tracking. Further, a tracking result of a camera related to the deleted tracking result of the camera is also deleted by considering a spatiotemporal restriction on the basis of the special positional relationship between the cameras.

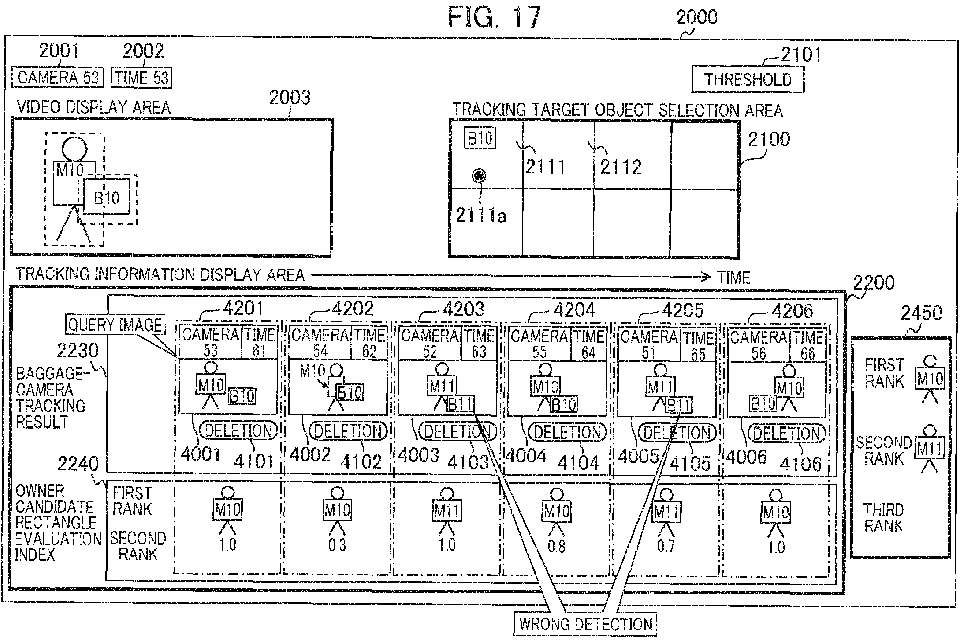

FIG. 17 shows a display screen displayed on a terminal PC in the case where baggage tracking is performed in the embodiment. In FIG. 17, the functions same as those of FIG. 13 of the first embodiment are followed by the same signs, and the explanation thereof will be omitted. FIG. 17 is different from FIG. 13 in that buttons 4101 to 4106 linked to videos of the respective cameras are provided to delete the corresponding tracking results.

In the example of FIG. 17, the owner is searched for by tracking a possession B10. However, baggage B11 is wrongly tracked by a camera 52 and a camera 51 in baggage inter-camera tracking results 2230, and as a result, a person M11 is determined as a wrong owner in addition to a person M10 who is the original owner (4203 and 4205).

In this case, in the case where an operator determines that wrong detection has occurred when viewing the screen, it is necessary to delete the corresponding wrong tracking result by pressing a deletion button 4103 or 4105. Further, when the video of either the camera 52 or 51 is deleted by the deletion button 4103 or 4105 in the embodiment, a spatiotemporal restriction is determined by an algorism to be described later, and the relevant wrong detection result (one of the tracking results of the cameras 52 and 51) is also automatically deleted.

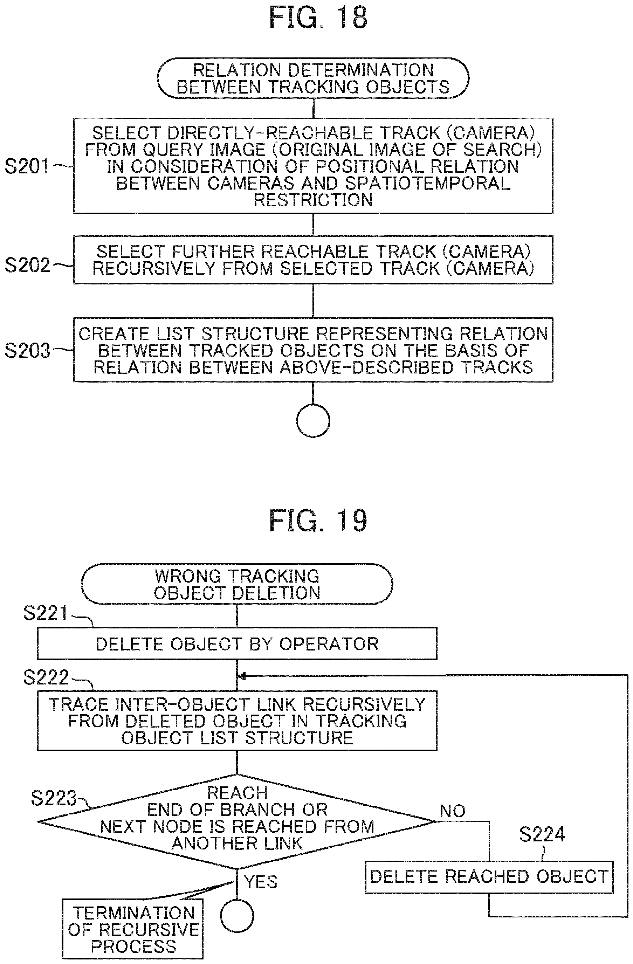

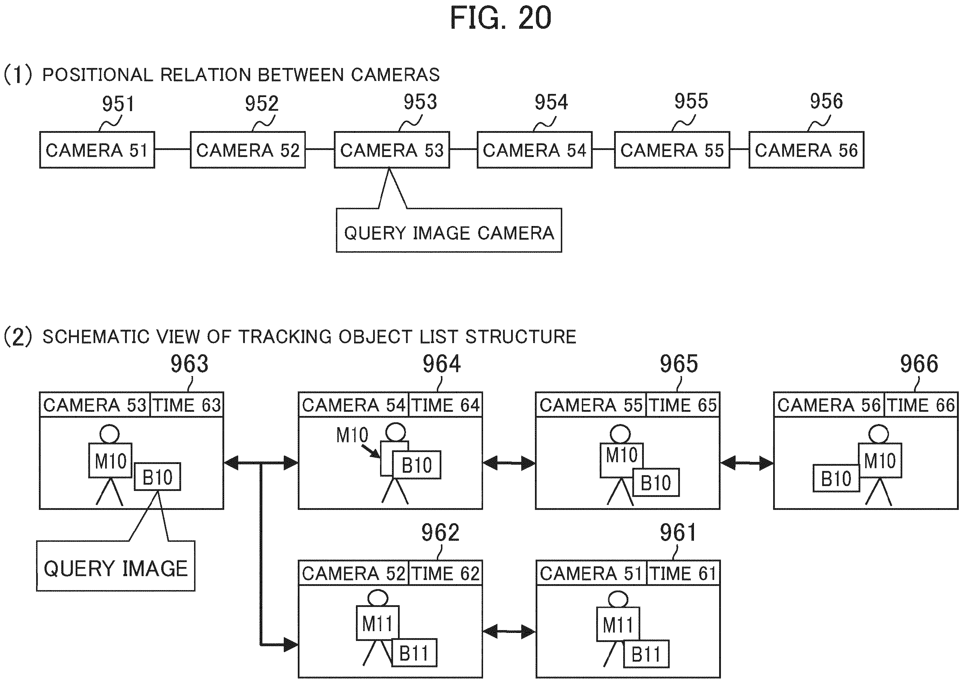

Next, a method of deleting a relevant wrong tracking result on the basis of a positional relation between cameras will be described using FIGs. 18, 19, and 20. In (1) of FIG. 20, a positional relation between cameras (reachable routes between cameras in the monitoring target place) is shown. In the embodiment, cameras 51 to camera 56 are arranged as shown in the drawing. Cameras adjacent to the camera 53 on the both sides designated as a query target in FIG. 17 are cameras 52 and 54, and cameras further adjacent thereto are cameras 51 and 55. For example, when moving from the camera 53 to the camera 51, it is necessary to pass through the camera 52.

When the tracking screen shown in FIG. 17 is displayed, a relation between tracking objects is determined on the basis of the processing flow shown in FIG. 18. The processing flow of FIG. 18 is performed subsequent to Step S122 of the inter-camera baggage possession status display (FIG. 12). In FIG. 18, the positional relation between the cameras and the spatiotemporal restriction ((1) of FIG. 20) are first determined, and a track from a camera photographing a query image 2003 (searched image) of FIG. 17 to a directly-reachable camera (without passing through other cameras) is selected (Step S201). In this case, the tracks of the cameras 52 and 54 that are not inconsistent with the image of the camera 53 in consideration of the spatiotemporal restriction are selected. Here, the determination of the spatiotemporal restriction is a known technique to exclude a track that cannot be reached from the timing the query image was photographed or cannot be reached at the timing the query image was photographed on the basis of the distance between the cameras and the time when the video was photographed. For example, a track photographed by another camera at the same time as the query image or a track that is too close in time photographed between the cameras as compared to the time required to move between the cameras is excluded.

Thereafter, a camera (track) that is further reachable from the camera of the selected track is recursively selected (Step S202). Specifically, the camera 51 that is reachable from the camera 52, the camera 55 that is reachable from the camera 54, and the camera 56 are determined. Finally, a list structure ((2) of FIG. 20) representing a relation between the tracked objects is created on the work area 1220 of the memory on the basis of the relation between the determined tracks (Step S203). The structure is created every search.

In (2) of FIG. 20, a schematic view of a list structure representing the relation between the tracked objects is shown. The list structure represents the relation between the searched objects (baggage in the embodiment) on the basis of an inter-camera (track) dependency relation in consideration of the spatiotemporal restriction of the tracked objects. In the drawing, although each node is shown using a picture of a representative image to easily understand the embodiment, the relation between the objects is managed by a bidirectional list in the actual data configuration. In the embodiment, nodes 962 and 964 representing the objects detected by the cameras 52 and 54 on the both sides are first linked to a node 963 representing the object detected in the query image of the camera 53 in the above-described Step S201. Thereafter, in a recursive process described in Step S202, a node 961 representing the object of the camera 51 is linked to the node 962 representing the object of the camera 52, a node 965 representing the object of the camera 55 is linked to the node 964 representing the object of the camera 54, and further a node 966 representing the object of the camera 56 is linked. As a result, the structural body shown in (2) of FIG. 20 is created.

Next, an algorism to remove a wrong tracking object is shown in FIG. 19. In FIG. 19, when an operator manually deletes a wrongly-tracked object on the screen of FIG. 17 (Step S221), an inter-object link is recursively traced from the deleted object in the tracking object structural body in (2) of FIG. 20 (Step S222). However, in the case where the link reaches the end of a branch or the next node is reached from another link when tracing the link, the recursive process is stopped (Step S223) . In the case where the above-described termination conditions are not satisfied, the object corresponding to the reached node is deleted (Step S224), and then the process returns to Step S222 to recursively continue the process.

For example, in the case where the tracking result of the object B11 appearing on the camera 52 is deleted by an operator in (2) of FIG. 20, the node 962 of the corresponding tracking object structural boy is deleted. Nodes that can be traced therefrom are the nodes 963 and 961. However, since the node 963 is also reached from the link from the node 964, the node 963 is excluded from the recursive deletion by the determination in Step S223. As a result, only the node 961 of the tracking object structural body is deleted by the process of Step S224. Finally, the video of the track of the camera 51 relevant to the video of the track determined as wrong detection in the camera 52 by the operator is automatically deleted.

In the case where an operator deletes the wrong tracking object in FIG. 17, the above-described process realizes automatic exclusion of a relevant wrong tracking object in consideration of the spatiotemporal restriction.

### [Third Embodiment]

In the above-described embodiments, ownership between a person and baggage is determined. However, the method in the above-described embodiments can be applied to a relation between other objects. For example, the similar method can be applied to a relation between a person and an automobile and a relation between a person and a bicycle.

Accordingly, the baggage possession determination indicator value 1354 in the above-described embodiment serves as an index indicating a possession, use, and grasp between a person and an object in the embodiment.

In addition, between a person and an automobile, the tracking of the person is possibly interrupted due to occurrence of an occlusion. Therefore, plural tracks of a person are connected to each other on the screen using the track cluster ID.

Although the embodiments have been described above, the present invention is not limited to the above-described embodiments, and includes various modified examples. For example, the embodiments have been described in detail to easily understand the present invention, and the present invention is not necessarily limited to those including all the configurations described above. In addition, some configurations of an embodiment can be replaced by a configuration of another embodiment. In addition, a configuration of an embodiment can be added to a configuration of another embodiment. In addition, some configurations of each embodiment can be added to, deleted from, and replaced by other configurations. Features described in this specification and/or in the claims and/or shown in a figure shall be deemed combinable with and amongst each other also if their combination is not expressly described, to the extent that the combination is technically feasible. Features described in a certain context, embodiment, figure or claim shall be deemed separable from this claim, context, embodiment or figure and shall be deemed combinable with every other figure, claim, context or embodiment, to the extent that it is technically feasible. Embodiments and figures shall not be understood as being meant necessarily exclusive against each other. Descriptions of a method or procedure or a method step or a procedural step shall be understood also as description of means and/or possibly as a data carrier holding program instructions of executable code adapted for implementing the method or procedure or method step or procedural step, and vice versa.

In addition, some or all of the above-described configurations, functions, functional units, and the like may be realized using hardware by designing with, for example, integrated circuits.

## Claims

1. A video analysis system for analyzing videos photographed by plural cameras,
wherein plural time-series frame images imaged by the cameras are acquired, first and second objects are detected on the basis of the plural frame images, and an in-camera-video tracking process of each object is performed on the basis of plural time-series images,
wherein in each frame image, a local relationship degree in frame images of the first and second objects is determined on the basis of the types of the first and second objects and a distance between objects in each frame image,
wherein an in-camera-video inter-object relationship degree in the corresponding camera videos between the first and second objects is determined on the basis of tracking information of the first and second objects and the local relationship degree in the plural frame images photographed in time-series, and
wherein the first and second objects are linked to each other to be stored in a database together with the in-camera-video inter-object relationship degree.

2. The video analysis system according to claim 1,
wherein the in-camera-video inter-object relationship degree is an index indicating a possession, use, and grasp between a person and an object.

3. The video analysis system according to claim 1,
wherein tracking of the first and second objects is performed between the plural cameras, and
wherein an inter-object relationship degree between the cameras is determined on the basis of the in-camera-video inter-object relationship degree in the plural cameras to determine a comprehensive relationship degree between the objects.

4. The video analysis system according to claim 1, including:
a unit that displays time-series changes between the plural cameras in the in-camera-video inter-object relationship degree by performing the tracking of the first and second objects between the plural cameras.

5. The video analysis system according to claim 1, including:
a unit that associates the same objects with the tracking interrupted with each other to be stored in a database in the in-camera-video tracking process.

6. The video analysis system according to claim 1, including:
a unit that, after performing tracking of objects between the plural cameras, deletes an object determined by an operator as wrong detection; and
a unit that, when the wrongly-detected object is deleted, deletes an object relevant to the deleted object in consideration of a spatiotemporal restriction.

7. The video analysis system according to claim 1,
wherein the first object is a person and the second object is baggage, and
wherein the presence or absence of a baggage possession is determined for each person trace by the in-camera-video tracking process.

8. The video analysis system according to claim 1,
wherein the first object is a person and the second object is baggage, and
wherein a relationship degree between the person and the baggage is determined on the basis of tracking results of the plural cameras by the in-camera-video tracking process.

9. The video analysis system according to claim 4,
wherein the first object is a person and the second object is baggage, and
wherein the baggage relevant to the person is displayed while giving priority for each camera.

10. A video analysis method for analyzing videos photographed by plural cameras, comprising the steps of:
acquiring plural time-series frame images imaged by the cameras, detecting first and second objects on the basis of the plural frame images, and performing an in-camera-video tracking process of each object on the basis of plural time-series images;
determining, in each frame image, a local relationship degree in frame images of the first and second objects on the basis of the types of the first and second objects and a distance between objects in each frame image;
determining an in-camera-video inter-object relationship degree in the corresponding camera videos between the first and second objects on the basis of tracking information of the first and second objects and the local relationship degree in the plural frame images photographed in time-series; and
linking the first and second objects to each other to be stored in a database together with the in-camera-video inter-object relationship degree.
